Europäisches Patentamt

European Patent Office

Office européen des brevets

(11) Publication number: 0 359 230

A1

# EUROPEAN PATENT APPLICATION

(21) Application number: 89116953.4

(51) Int. Cl.5: B01J 2/14

(22) Date of filing: 13.09.89

(30) Priority: 13.09.88 JP 229519/88

(43) Date of publication of application:
21.03.90 Bulletin 90/12

(34) Designated Contracting States:
DE FR GB IT

(71) Applicant: NKK CORPORATION
1-2, 1-chome, Marunouchi Chiyoda-ku
Tokyo(JP)

(72) Inventor: Gocho, Makoto Patent & Licence
Department
NKK CORPORATION 1-2,
1-chome,Marunouchi Chiyoda-ku
Tokyo(JP)
Inventor: Shimizu, Masayasu Patent &
Licence Department
NKK CORPORATION 1-2,
1-chome,Marunouchi Chiyoda-ku
Tokyo(JP)

Inventor: Noda, Hidetoshi Patent & Licence
Department
NKK CORPORATION 1-2,
1-chome,Marunouchi Chiyoda-ku
Tokyo(JP)
Inventor: Komatsu, Osamu Patent & Licence
Department
NKK CORPORATION 1-2,
1-chome,Marunouchi Chiyoda-ku
Tokyo(JP)
Inventor: Inoue, Hideaki Patent & Licence
Department
NKK CORPORATION 1-2,
1-chome,Marunouchi Chiyoda-ku
Tokyo(JP)

(74) Representative: Füchsle, Klaus, Dipl.-Ing. et al
Hoffmann . Eitle & Partner Patentanwälte
Arabellastrasse 4
D-8000 München 81(DE)

(54) Apparatus for pelletizing material.

(57) An apparatus for pelletizing material comprises a rotating pan (1) inclined at 30 to 60 °, a device for feeding a liquid binder to material in the rotating pan and a device (4) for measuring a thickness of material in the rotating pan.

The device for measuring a thikness of material is a device for measuring a thickness of material by the use of ultrasonic waves.

The device for measuring a thickness of material is a device for measuring a thickness of material which is arranged so that distance " d" from the upper end to the lower end of the pan can be within a range of 0.15 D to 0.4 D when the diameter of the pan " D".

The device for feeding a liquid binder comprises nozzles (5), a pipe (6), on which the nozzles are mounted, and a device (7) for moving the pipe in the horizontal direction.

FIG.1

# APPARATUS FOR PELLETIZING MATERIAL

The present invention relates to an apparatus for pelletizing material, and more particularly to a pelletizer for which a pan type pelletizer is used.

In a rotary pan type pelletizer, spherical pelletized material is obtained by rotating a pan type vessel inclined at 30 to 60° to the horizontal plane and by continuously feeding powdery material and water as a liquid binder from the upper side of a pan onto the pan. To make particle sizes of the pelletized material small, a depth of the pan is made small or a rotating speed of the pan is increased or an inclination of the pan is made large. To make the particle sizes of the pelletized material large, the depth of the pan is made large or the rotating speed of the pan is decreased or the inclination of the pan is made small. The particle sizes of the pelletized material are controlled by controlling an amount of the liquid binder fed onto the pan. In the case properties of powdery material are stable, it is effective to control the particle sizes of the pelletized material by changing the rotating speed or the inclination of the pan. During operation, however, in the case the particle sizes of the pelletized material are controlled by often changing the rotating speed or the inclination of the pan during continuous feeding of the powdery material, there are a number of problems in connection with other auxiliary facilities required for material supply, discharge of the pelletized material or the like. Particularly, when a size of the pan is large, it is disadvantageous in a cost of equipment to set up a control device for controlling the rotating speed or the inclination of the pan. Accordingly, the particle sizes of the pelletized material are controlled by the amount of the liquid binder fed onto the pan and positions, from which material is fed. In this case, the particle sizes of the pelletized material are controlled by experienced operators stationed near the pelletizer. In consequence, it is difficult to automate control of the particle sizes of the pelletized material.

It is an object of the present invention to provide an apparatus for pelletizing material which can control automatically particle sizes of pelletized material.

To accomplish the above-mentioned object, the present invention provides an apparatus for pelletizing material comprising:
a rotating pan inclined at 30 to 60° ;
means for feeding a liquid binder to material in said rotating pan; and
means for measuring a thickness of material in said rotating pan.

The above objects and other objects and advantages of the present invention will become apparent from the detailed description to follow, taken in connection with the appended drawings.

Fig.1 is a top plan view of an apparatus for pelletizing material of the present invention; and

Fig.2 is a schematic view illustrating a process of pelletizing of the present invention.

A distribution of thicknesses of material layers occurs dependent on rotation and inclination of a pan of an apparatus for pelletizing material. Pelletized material of smaller particle size has a tendency to be retained in an upper portion of the pan and that of larger particle size in a lower portion of the pan under the influence of gravity. When the liquid binder is fed to a fine particle portion of material of small particle size, average particle size of pelletized material discharged from the pan become smaller. When the liquid binder is fed to a coarse particle portion of the material of large particle size, the average particle size of the pelletized material become larger. In the case the liquid binder is fed to the coarse particle portion of the material, particles of small size stick to particles of large size and particles grow larger. When a ultrasonic sensor is arranged on the upper side of the pan, a distribution of thicknesses of the fine particle portion and coarse particle portion of material layers in the pan can be known. Particle sizes of the pelletized material discharged from the pan can be controlled on the basis of the distribution of the thicknesses of the material layers known by means of the ultrasonic sensor.

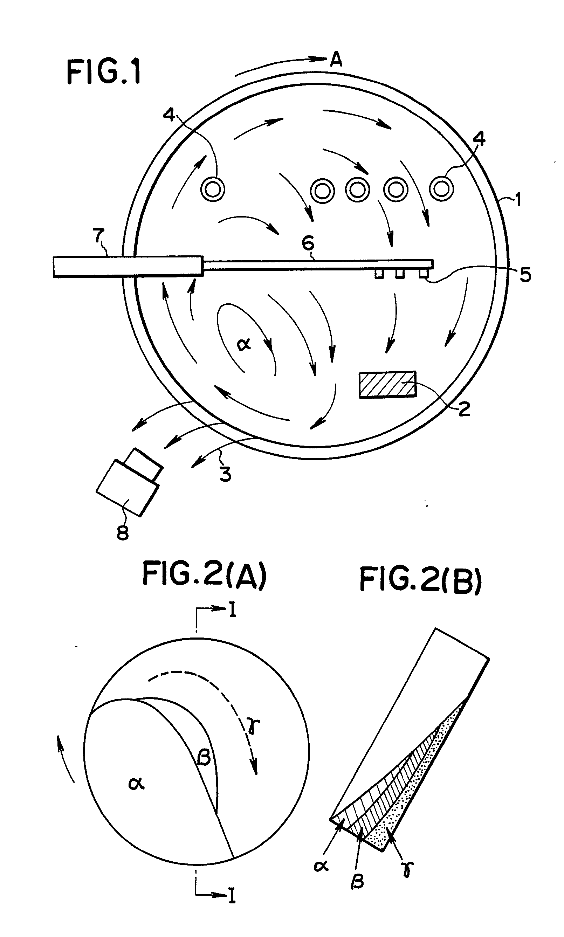

An example of the present invention will be described with specific reference to the appended drawings. Fig.1 is a top plan view showing an apparatus for pelletizing material of the present invention. In the drawing, referential numeral 1 denotes a pan, onto which powdery material is fed. Arrow symbol A designates a direction of rotation of the pan. Referential numeral 2 denotes a position of charging of material, from which the powdery material is fed onto the pan. Arrow symbols shown with referential numeral 3 designate a direction of discharging of material, along which the pelletized material is discharged outwardly from the pan. Particle sizes of the pelletized material discharged are measured by the use of means 8 for measuring particle size. Arrow symbols in the pan designate directions of movements of the powdery material or growing particles. Referential numeral 5 denotes a nozzle, through which water as a binder is fed to the material, 6 a pipe, on which nozzles 5 are mounted, 7 a device for moving the pipe 6 in the horizontal direction and 4 means for measuring a thickness of layers of the powdery material in the pan.

Subsequently, a work of the apparatus for pelletizing material constituted in such a manner as described above will be described. Powdery material charged from the position 2 of charging of material into the pan 1 moves towards an upper portion of the pan 1 with rotation of the pan 1, the direction of which is shown with arrow symbol A in the drawing. When the powdery material moves to the position of the nozzles 5, water is sprinkled on the powdery material and the powdery material begins to agglomerate. The charged material contacts and sticks to the material previously charged before coming to the position of the nozzles 5 or agglomerates itself, water being fed, and often turns into fine particles. As the particle sizes of the material grow larger gradually, the material being pelletized, during rotation of the material, the material does not go up to the upper portion of the pan 1. Due to a small friction coefficient of the pelletized material relative to the pan 1, the pelletized material moves to the surface of the material and grown pelletized material is discharged outwardly in the direction 3 of discharging. Portion "α", where arrow symbols indicate the rotation of the pan, is a coarse particle portion of the material. The nearer to the position 3 of discharging the pelletized material comes, the larger the particle sizes of the pelletized material become. The fine particle portion of the pelletized material rotates on the outer side of the coarse particle portion. The larger a radius of rotation of the fine particle portion is, the smaller the particle sizes of the pelletized material are.

To make the particle sizes of the pelletized material smaller, the amount of water fed to the material is decreased and simultaneously the position of the pipe 6 is moved to the right. That is, water is sprinkled on the fine particle portion, but water is not sprinkled on the coarse particle portion. Then, powdery material sticks to the pelletized material of small particle size thanks to sprinkling of water and particle sizes of the pelletized material are somewhat increased. As a result, the pelletized material of increased particle size goes down from the fine particle portion to the coarse particle portion. Since water is not sprinkled on the coarse particle portion, powdery material does not stick to the material of large particle size and the material of large particle size is discharged from the pan 1. When the particle sizes of the pelletized material are going to be increased to the contrary, the pipe 6 is moved to the left. Then, the powdery material sticks to the pelletized material of large particle size and the particle sizes of the pelletized material of large particle size grows larger. On the other hand, the particle sizes of the pelletized material of small particle size do not grow larger. Therefore, the powdery material sticks to the pelletized material of large particle size.

Means for measuring thicknesses of material layers is one selected from the group of ultrasonic sensor, optical sensor and electrode. In the ultrasonic sensor, ultrasonic waves transmitted from a surface of the ultrasonic sensor strike a surface of the material and is inputted into a receiving sensor, reflecting from the surface of the material. Thickness of the material layers is detected as a distance by means of a converter on the basis of time from transmitting to receiving of the ultrasonic waves. The thickness of the material layers is calculated on the basis of a distance from the surface of the sensor to the surface of the material. Since the thickness of the material layers can be continuously measured by the use of the ultrasonic sensor which does not contact the surface of the material, stain on the surface of the sensor produces a little influence on accuracy of measurement. Therefore, the ultrasonic sensor is preferred. The thickness of the material layers can be measured even by means of the optical sensor which does not contact the surface of the material. The thickness of the material layers can be measured by thrusting a plurality of electrodes of various lengths into the material layers.

Said means for measuring a thickness of material layers is desired to be arranged so that distance "d" can be within a range of 0.15 D to 0.4 D when the diameter of the pan is " D ". Fig.2 is a schematic view illustrating a process of pelletizing of the present invention. Fig.2 (B) is a sectional view taken on line 1 - 1 of Fig.2 (A). A pelletizing zone is divided mainly into three zones. α-zone is a zone where pellets having terminated growth undergo a final rolling pelletizing on the surface of retention layers of pellets. β-zone is a zone where pellets are produced and grow, and a track of circulation of the pellets becomes narrow. γ-zone is a zone where new dry powder and undergrown pellets are humidified in a wide range of rolling and falling movements and produce cores. When the dry powder and undergrowing pellets go up, γ-zone gets into under layers of grown pellets. The above-mentioned range of 0.15 D to 0.4D is a range where γ-zone appears on the surface of the material layers. It is found that it produces the greatest influence on pelletizing to measure a thickness of the material layers of γ-zone composed of the new dry powder and the undergrown pellets. When the above-mentioned "d " is larger than 0.4 D, γ-zone does not appear on the surface of the material layers. This is not favorable. When "d " is smaller than 0.15 D, it produces a small influence on pelletizing. "d " is desired to be within a range of 0.2 D to 0.3 D.

At least three devices for measuring a thickness of material layers are desired to be set up since the distribution of thicknesses in the upper portion of the pan is hard to catch if there are less than three devices for measuring a thickness of material layers. In the case the thickness of the material layers is beyond an appropriate range, an amount of sprinkled water, positions of sprinkling, inclinations of the pan and rotating speed are adjusted.

Particle size of the pelletized material being discharged is checked by the use of means for measuring particle size which is directed to direction 3 of discharging. The means for measuring particle size is composed of a television camera for receiving televisional pictures of pelletized material being discharged and a picture processing device. Average particle size and a distribution of particle sizes are found from data obtained by processing pictures. In the case the average particle size of the pelletized material becomes smaller than predetermined particle size, for example, measures are taken to increase pelletizing of the material. To the contrary, when the average particle size of the pelletized material becomes larger than predetermined particle size, measures are taken to decrease pelletizing of the material. To increase the pelletiaing of the material, a thickness of the material layers, which is found by the use of the means for measuring a thickness of material layers, is decreased by a predetermined amount of material. To decrease the pelletizing of the material, a thickness of the material layers, which is found by the use of the means for measuring a thickness of material layers, is increased by a predetermined amount of material.

Example

Operation was carried out under the following conditions:
Particle size of used material: 20 to 60% of material of below 44 μm in particle size
Diameter of a pan: 7.5 m
Number of rotations: 5.0 to 9.0 rpm
Inclination of the pan: 45 to 60°
Measurement of thicknesses: Ultrasonic sensor
Measurement of particle sizes: Television camera and picture processing device
Pelletized material of 4.0 to 10.0 mm in particle size, which was a predetermined pelletized material, was obtained.

Reference signs in the claims are intended for better understanding and shall not limit the scope.

**Claims**

1. An apparatus for pelletizing material comprising: a rotating pan (1) inclined at 30 to 60° ; and means for feeding a liquid binder to material in said rotating pan;
characterized by means (4) for measuring a thickness of material in said rotating pan.

2. The apparatus of claim 1, characterized in that said means for measuring a thickness of material is a device for measuring a thickness of material layers by the use of ultrasonic waves.

3. The apparatus of claim 1, characterized in that said means for measuring a thickness of material layers is an optical sensor.

4. The apparatus of claim 1, characterized in that said means for measuring a thickness of material layers is an electrode.

5. The apparatus of claim 1, characterized in that said means for measuring a thickness of material layers is at least three devices for measuring a thickness of material layers which are arranged on the upper side of the pan at a predetermined interval in the horizontal direction.

6. The apparatus of claim 5, characterized in that said device for measuring a thickness of material layers is a device for measuring a thickness of material layers which is arranged so that distance "d " from the upper end to the lower end of the pan can be within a range of 0.15 D to 0.4 D when the diameter of the pan is "D ".

7. The apparatus of claim 6, characterized in that said device for measuring a thikness of material layers is a device for measuring a thickness of material layers which is arranged so that distance "d " from the upper end to the lower end of the pan can be within a range of 0.2 D to 0.3 D when the diameter of the pan is "D ".

8. The apparatus of claim 1, characterized in that said means for feeding a liquid binder comprises nozzles (5), a pipe (6), on which said nozzles are mounted, and a device (7) for moving said pipe in the horizontal direction.

9. The apparatus of claim 1, characterized in that said means for measuring a thickness of material layers is a device for measuring a thickness of material layers by the use of ultrasonic waves; said means for measuring a thickness of material layers are at least three devices for measuring a thickness of material layers by the use of ultrasonic waves; and said means for feeding a liquid binder comprises nozzles, a pipe, on which said nozzles are mounted , and a device for moving said pipe in the horizontal direction.

10. The apparatus of claim 1, characterized by further comprising means (8) for measuring particle size of pelletized material discharged from said pan.

11. The apparatus of claim 10, characterized in that said means for measuring particle size of pelletized material comprises a televison camera for receiving televisional pictures of the pelletized material being discharged and a picture processing device.

FIG.1

A

4

4

1

7

6

5

α

2

3

8

FIG.2(A)

FIG.2(B)

I

γ

β

α

α

β

γ

I

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 395 479  (OWENS-CORNING FIBER GLAS CORP.)<br>* Page 2, line 19 - page 3, line 15; page 5, line 2 - page 10, line 19; figures 1,4 *<br>--- | 1-3 | B 01 J   2/14 |
| A | US-A-3 883 281  (C.A. HOLLEY)<br>* Column 1, lines 23-31; column 2, lines 30-46; figures 1-3 *<br>----- | 1,4 | |

TECHNICAL FIELDS
SEARCHED (Int. Cl.5)

B 01 J
C 03 B
C 22 B

The present search report has been drawn up for all claims

| Place of search | Date of completion of the search | Examiner |
|---|---|---|
| THE HAGUE | 16-10-1989 | PYFFEROEN K. |